Europäisches Patentamt

European Patent Office

Office européen des brevets

(19)

(11) Veröffentlichungsnummer: **0 130 970**
**B1**

(12) **EUROPÄISCHE PATENTSCHRIFT**

(45) Veröffentlichungstag der Patentschrift:
08.10.86

(51) Int. Cl.⁴: **B 60 K 17/346**

(21) Anmeldenummer: **84890123.7**

(22) Anmeldetag: **02.07.84**

(54) Antriebsanordnung für ein allradgetriebenes Kraftfahrzeug.

(30) Priorität: **05.07.83 AT 2453/83**

(43) Veröffentlichungstag der Anmeldung:
**09.01.85 Patentblatt 85/2**

(45) Bekanntmachung des Hinweises auf die Patenterteilung:
**08.10.86 Patentblatt 86/41**

(84) Benannte Vertragsstaaten:
**CH DE FR GB IT LI SE**

(56) Entgegenhaltungen:
**US - A - 3 976 154**
**US - A - 4 216 843**

(73) Patentinhaber: **Steyr-Daimler-Puch Aktiengesellschaft, Kärntnerring 7, A-1010 Wien (AT)**

(72) Erfinder: **Friedrich, Karl, Ing., Seggauberg 5, A-8430 Leibnitz (AT)**
Erfinder: **Lanzer, Heribert, Dipl.-Ing., Hauptstrasse 236, A-8071 Gössendorf (AT)**
Erfinder: **Ashikawa, Noboru, 3-5-105, Tsutsujino 1-259, Kamihirose Sayama-shi Saitama 350-13 (JP)**

## Beschreibung

Die Erfindung bezieht sich auf eine Antriebsanordnung für ein allradgetriebenes Kraftfahrzeug mit einem Geschwindigkeitswechselgetriebe, dessen Abtriebsrad mit dem einen Aussenzahnkranz tragenden Planetenradträger eines Stirnradausgleichgetriebes kämmt, von dessen Zentralrad einerseits und Hohlrad anderseits die Radantriebe über weitere Ausgleichgetriebe abgeleitet sind, wobei der Aussenzahnkranz mit dem Planetenradträger und einer frei drehbar gelagerten Stützscheibe verschraubt und zwischen Planetenradträger und Stützscheibe das Hohlrad angeordnet ist.

Das Stirnradausgleichgetriebe, das dem Geschwindigkeitswechselgetriebe des Kraftfahrzeuges unmittelbar nachgeordnet ist, hat die Aufgabe, den Ausgleich zwischen der angetriebenen Vorder- und Hinterachse herbeizuführen, wogegen die weiteren Ausgleichgetriebe dem Ausgleich zwischen den beiden Rädern je einer Achse dienen. Eine Antriebsanordnung der eingangs geschilderten Art ist bereits bekannt (GB-A-1 228 752). Dabei sind zwei Stirnradausgleichgetriebe unmittelbar nebeneinander angeordnet, d.h. der mit dem Abtriebsrad des Geschwindigkeitswechselgetriebes kämmende Aussenzahnkranz ist mit dem Planetenradträger des einen Stirnradausgleichgetriebes verschraubt und die Stützscheibe umfasst gehäuseartig den Planetenradträger des zweiten Stirnradausgleichgetriebes, wobei diese beiden Getriebe ein gemeinsames Hohlrad aufweisen, in das nebeneinander die Planetenräder der beiden Ausgleichgetriebe eingreifen. Von dem Zentralrad des ersten Ausgleichgetriebes wird der Antrieb der Hinterachse abgeleitet, wogegen der Planetenradträger einerseits und das Zentralrad anderseits des zweiten Ausgleichgetriebes mit den beiden ineinandergelagerten, voneinander unabhängig drehbaren Teilen der Vorderachsantriebswelle drehfest verbunden sind. Nachteilig ist hiebei, dass der Abtrieb vom ersten Stirnradausgleichgetriebe verhältnismässig grosse Abmessungen in Richtung der Getriebeachse erfordert und dass das zweite Ausgleichgetriebe, um für die beiden Teile der Vorderachsantriebswelle dieselbe Drehrichtung zu erreichen, zusätzlich zu den Planetenrädern noch Umkehrräder benötigt, die den technischen Aufwand und die Herstellungskosten beträchtlich erhöhen. Ausserdem ergibt sich eine ungünstige Lagerung bzw. Abstützung des Hohlrades in Achsrichtung.

Somit liegt der Erfindung die Aufgabe zugrunde, diese Mängel zu beseitigen und die eingangs geschilderte Antriebsanordnung so zu verbessern, dass sich eine konstruktive Vereinfachung mit Verringerung der Abmessung in Richtung der Getriebeachse ergibt. Ausserdem soll die Anordnung so getroffen werden, dass es möglich ist, unter Beibehaltung der wesentlichen Konstruktionsteile je nach Bedarf zwei verschiedene Leistungsaufteilungen zu erreichen.

Die Erfindung löst die gestellte Aufgabe dadurch, dass für den einen Radantrieb ein mit verlängerter Nabe topfförmig ausgebildetes Stirnrad dient, in dem der Planetenradträger eingeschachtelt gelagert ist, wobei das Hohlrad unmittelbar zwischen dem Planetenradträger und der Stützscheibe axial festgelegt ist.

Durch die topfförmige Ausbildung des Stirnrades und die dadurch ermöglichte weitgehende Verlagerung des Planetenradträgers in dieses Stirnrad wird die axiale Ausdehnung des Stirnradausgleichgetriebes auf ein Minimum herabgesetzt. Die Stützscheibe ist eng an den Planetenradträger herangerückt, so dass sich eine gute Lagerung des Hohlrades ergibt und die axiale Länge weiter verringert wird. Vom Stirnradträger kann der eine Radantrieb unmittelbar abgeleitet werden. Die Verringerung der Ausdehnung in Richtung der Getriebeachse ist insbesondere dann von Vorteil, wenn es sich um eine Antriebsanordnung mit quer zur Fahrtrichtung gestelltem Motor bzw. quer zur Fahrtrichtung verlaufenden Achsen des Geschwindigkeitswechselgetriebes und des Ausgleichgetriebes handelt, weil dann für die die Vorderräder antreibenden, als Gelenkwellen ausgebildeten Halbwellen in günstiger Weise grössere Längen zur Verfügung stehen, so dass vergleichsweise grosse Federwege, verringerte Lenkrückstellkräfte und kleine Neigungswinkel der gleich langen Gelenkwellen erreichbar sind.

In weiterer Ausbildung der Erfindung ist die verlängerte Nabe des auf der Welle des Stirnradausgleichgetriebes frei drehbaren topfförmigen Stirnrades als Zentralrad ausgebildet und innerhalb der Stützscheibe ein auf der Welle drehfester, in die Verzahnung des Hohlrades eingreifender Mitnehmersteg vorgesehen. In diesem Fall erfolgt also der eine Abtrieb vom Zentralrad unmittelbar über das Stirnrad zu der einen Achse und vom Hohlrad über den Mitnehmersteg zur anderen Achse. Ohne Abänderung der wesentlichen Getriebeteile, insbesondere des Planetenradträgers und der Lager, ist es aber auch möglich, zur Änderung der Drehmomentverteilung in der Weise vorzugehen, dass das Zentralrad auf der Welle des Stirnradausgleichgetriebes drehfest sitzt und das topfförmige Stirnrad mit einem in die Verzahnung des Hohlrades eingreifender Mitnehmersteg drehfest verbunden ist.

In der Zeichnung ist der Erfindungsgegenstand beispielsweise dargestellt, und zwar zeigen:

Fig. 1 eine Antriebsanordnung für ein allradgetriebenes Kraftfahrzeug im Schema,

Fig. 2 das Stirnradausgleichgetriebe der Antriebsanordnung im grösseren Massstab im Axialschnitt und

Fig. 3 eine Ausführungsvariante dieses Stirnradausgleichgetriebes in gleicher Darstellungsweise.

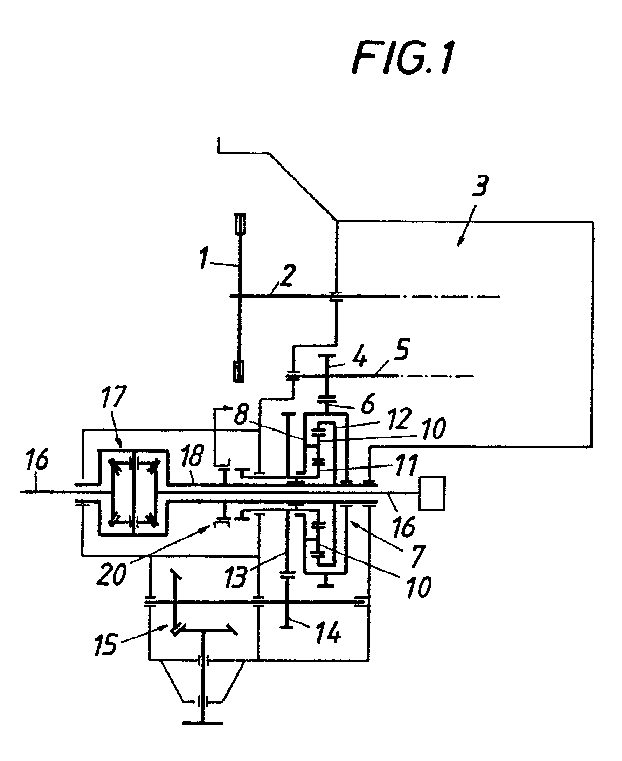

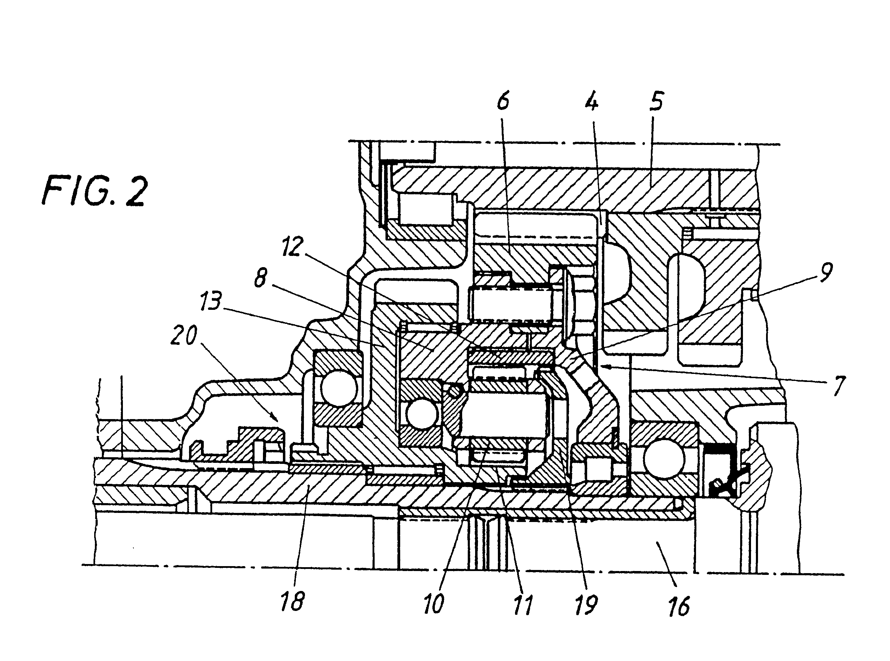

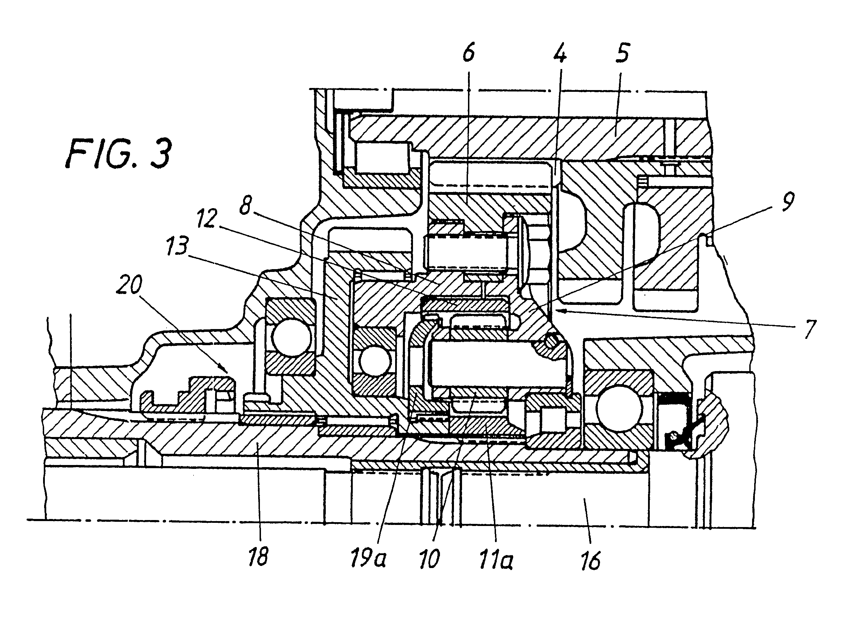

Vom nicht dargestellten Motor wird über eine Kupplung 1 die Eingangswelle 2 des Geschwindigkeitswechselgetriebes 3 angetrieben, dessen Abtriebsrad 4, das mit seiner Welle 5 einstückig ausgebildet ist (Fig. 2 und 3), mit einem Aussenzahnkranz 6 eines Stirnradausgleichgetriebes 7 kämmt. Der Aussenzahnkranz 6 ist einerseits mit dem Planetenradträger 8 und anderseits mit einer frei drehbar gelagerten Stützscheibe 9 (im Schema gemäss Fig. 1 nicht dargestellt) verschraubt. Die Planetenräder des Stirnradausgleichgetriebes 7 sind mit 10 bezeichnet und stehen mit dem Zentralrad 11, 11a in Eingriff. Zwischen dem Planetenradträger 8 und der Stützscheibe 9 ist das Hohlrad 12 des Stirnradausgleichgetriebes 7 gelagert bzw. axial festgelegt. Der Planetenradträger 8 ist in einem topfförmig ausgebildeten und eine verlängerte Nabe aufweisenden Stirnrad 13 gelagert, das über ein weiteres Stirnrad 14 und einen Kegeltrieb 15 sowie ein nicht dargestelltes weiteres Ausgleichgetriebe die Räder der vom Geschwindigkeitswechselgetriebe 3 entfernteren Fahrzeugachse antreibt. Der Antrieb der zu den Rädern der dem Geschwindigkeitswechselgetriebe benachbarten Fahrzeugachse führenden Halbwellen 16 erfolgt über ein Kegelausgleichgetriebe 17, das von einer Hohlwelle 18 angetrieben wird.

Gemäss den Fig. 1 und 2 bildet die verlängerte Nabe des auf der Hohlwelle 18 frei drehbaren, topfförmigen Stirnrades 12 selbst das Zentralrad 11, wogegen innerhalb der Stützscheibe 9 ein auf der Hohlwelle 18 drehfester Mitnehmersteg 19 (in Fig. 1 nicht dargestellt) vorgesehen ist, der in die Verzahnung des Hohlrades 12 eigreift. Die Leistungsteilung erfolgt also einerseits über das Zentralrad 11 und die Stirnräder 13, 14 bzw. den Kegeltrieb 15 zur entfernteren Fahrzeugachse und andersseits vom Hohlrad 12 über den Mitnehmersteg 19 zur Hohlwelle 18 und von dieser über das Kegelradausgleichgetriebe 17 zu den Halbwellen 16 der dem Geschwindigkeitswechselgetriebe 3 unmittelbar benachbarten Fahrzeugachse. Mit 20 ist eine Sperre für das Stirnradausgleichgetriebe 7 bezeichnet.

Die Konstruktion nach Fig. 3 unterscheidet sich von jener gemäss Fig. 2 dadurch, dass die Nabe des topfförmigen Stirnrades 13 etwas verkürzt und drehfest mit einem Mitnehmersteg 19a verbunden ist, der wieder in die Verzahnung des Hohlrades 12 eingreift. In diesem Falle ist dann das Zentralrad 11a drehfest mit der Hohlwelle 18 verbunden, so dass der Antrieb für die vom Geschwindigkeitswechselgetriebe 3 entfernteren Fahrzeugräder vom Hohlrad 12 des Stirnradausgleichgetriebes 7 abgeleitet wird, wogegen der Antrieb der Halbwellen 16 über das Kegelradausgleichgetriebe 17 und die Halbwelle 18 vom Zentralrad 11a des Stirnradausgleichgetriebes 7 her erfolgt.

## Patentansprüche

1. Antriebsanordnung für ein allradgetriebenes Kraftfahrzeug mit einem Geschwindigkeitswechselgetriebe (3), dessen Abtriebsrad (4) mit dem einen Aussenzahnkranz (6) tragenden Planetenradträger (8) eines Stirnradausgleichgetriebes (7) kämmt, von dessen Zentralrad (11, 11a) einerseits und Hohlrad (12) andersseits die Radantriebe (14, 15, 16) über weitere Ausgleichgetriebe (17) abgeleitet sind, wobei der Aussenzahnkranz (6) mit dem Planetenradträger (8) und einer frei drehbar gelagerten Stützscheibe (9) verschraubt und zwischen Planetenradträger (8) eingeschachtelt gelagert ist, wobei das Hohlrad (12) unmittelbar zwischen dem Planetenradträger (8) und der Stützscheibe (9) axial festgelegt ist.

2. Anordnung nach Anspruch 1, dadurch gekennzeichnet, dass die verlängerte Nabe des auf der Welle (18) des Stirnradausgleichgetriebes (7) frei drehbaren, topfförmigen Stirnrades (13) als Zentralrad (11) ausgebildet und innerhalb der Stützscheibe (9) ein auf der Welle (18) drehfester, in die Verzahnung des Hohlrades (12) eingreifender Mitnehmersteg (19) vorgesehen ist (Fig. 2).

3. Anordnung nach Anspruch 1, dadurch gekennzeichnet, dass das Zentralrad (11a) auf der Welle (18) des Stirnradausgleichgetriebes (7) drehfest sitzt und das topfförmige Stirnrad (13) mit einem in die Verzahnung des Hohlrades (12) eingreifenden Mitnehmersteg (19a) drehfest verbunden ist (Fig. 3).

## Claims

1. A drive arrangement for an all-wheel-drive motor vehicle with a speed-change gearbox (3), having a driven wheel (4) engaging with a planet wheel carrier of a spur-wheel differential (7), the planet wheel carrier (8) supporting an externally-toothed rim (6), wheel drives (14, 15, 16) being taken off the central gear (11, 11a) of the spur-wheel differential (7) on the one hand, and off the internally-toothed gear (12) thereof on the other hand by way of additional differentials (17), the externally-toothed rim (6) being bolted to the planet wheel carrier (8) and to a freely-rotatable supporting disc (9), and the internally-toothed gear (12) being arranged between the planet wheel carrier (8) and the supporting disc (9), characterized in that a spur wheel (13) is used for one wheel drive (14, 15) and is cup-shaped with an elongated hub and in which the planet wheel carreir (8) is mounted in a nested manner, the internally-toothed gear (12) being axially fixed directly between the planet wheel carrier (8) and the supporting disc (9).

2. An arrangement according to Claim 1, characterized in that the elongated hub of the cup-shaped spur wheel (13) freely rotatable on the shaft (18) of the spur wheel differential (7) is constructed as the central gear (11), and an entrainment web (19), which is rotationally rigid on the shaft (18) and engages in the toothing of the internally-toothed gear (12), is provided inside the supporting disc (9) (Fig. 2).

3. An arrangement according to Claim 1, characterized in that the central gear (11a) is mounted rotationally rigid on the shaft (18) of the spur-wheel differential (7), and cup-shaped spur wheel (13) is connected rotationally rigidly to an entrainment web (19a) engaging in the toothing of the internally-toothed gear (12) (Fig. 3).

## Revendications

1. Dispositif d'entraînement pour un véhicule automobile à toutes roues motrices, avec une boîte de vitesse (3) dont le pignon de sortie (4) engrène avec un porte-pignons satellites (8) qui porte une couronne dentée extérieurement (6) d'un différentiel à pignons droits (7), à partir du planétaire (11, 11a) duquel d'une part, et de sa couronne à denture intérieure (12) d'autre part, sont en dérivation les moyens (14, 15, 16) d'entraînement des roues par l'intermédiaire d'autres différentiels (17), la couronne dentée extérieurement (6) étant fixée par des vis au porte-pignons satellites (8) et à un disque d'appui (9) monté fou et la couronne à denture intérieure (12) étant disposée entre le porte-pignons satellites (8) et le disque d'appui (9), caractérisé en ce que l'on utilise pour l'un des moyens (14, 15) d'entraînement de roue un pignon à denture droite (13) à la configuration d'un pot à moyeu prolongé dans lequel est emboîté le porte-pignons satellites (8), la couronne à denture intérieure (12) étant bloquée en sens axial directement entre le porte-pignons satellites (8) et le disque d'appui (9).

2. Dispositif selon la revendication 1, caractérisé en ce que le moyeu prolongé du pignon à denture droite (13) à configuration de pot monté fou sur l'arbre (18) du différentiel droit (7) constitue le planétaire (11) et il est prévu à l'intérieur du disque d'appui (9) une barrette d'entraînement (19) qui est calée en rotation sur l'arbre (18) et qui s'engage avec la denture de la couronne à denture intérieure (12) (figure 2).

3. Dispositif selon la revendication 1, caractérisé en ce que le planétaire (11a) est calé en rotation sur l'arbre (18) du différentiel à pignons droits (7) et le pignon à denture droite (13) à configuration de pot est calé en rotation avec une barrette d'entraînement (19a) s'engageant avec la denture de la couronne à denture intérieure (12) (figure 3).

# FIG.1

FIG. 2

0 130 970

FIG. 3